# EUROPEAN PATENT APPLICATION

(11) **EP 2 434 199 A1**
(43) Date of publication of application: **28.03.2012**
(21) Application number: 10793922.5
(22) Date of filing: 17.05.2010
(51) Int. Cl.: F21S 2/00, F21V 5/00, F21V 19/00, G02F 1/13357, F21Y 101/02

(54) **LIGHTING DEVICE, DISPLAY APPARATUS, AND TELEVISION RECEIVING EQUIPMENT**

(30) Priority: 30.06.2009 JP 2009155530
(71) Applicant: Sharp Kabushiki Kaisha, Osaka-shi, Osaka 545-8522 (JP)
(72) Inventor: YOKOTA, Masashi, Osaka-shi, Osaka 545-8522 (JP)
(74) Representative: Müller-Boré & Partner Patentanwälte
(86) International application number: PCT/JP2010/058286
(87) International publication number: WO 2011/001751

(57) **Abstract**

It is an object of the present invention to provide a lighting device realizing reduction in cost and suppression of power consumption and suppressing generation of a lamp image. A lighting device 12 of the present invention includes a plurality of point light sources 80; a chassis 14 housing the point light sources 80 and having an opening 14b through which light of the point light sources 80 exits; and an optical member 15 (15a) facing the point light sources 80 and provided to cover the opening 14b. The point light sources 80 are arranged such that a light source high-density area LH where an arrangement interval thereof is relatively small and a light source low-density area LL where an arrangement interval thereof is relatively large are provided. Light reflection portions 24 reflecting light from the point light sources 80 are formed in at least a region overlapping with the light source low-density area LL in the optical member 15 (15a).

## Description

### TECHNICAL FIELD

The present invention relates to a lighting device, a display device and a television receiver.

### BACKGROUND ART

For example, a liquid crystal panel used for a liquid crystal display device such as a liquid crystal television does not emit light, and thus a backlight unit is required as a separate lighting device. The backlight unit is known, which is placed behind the liquid crystal panel (on a side opposite to a display surface side). The backlight unit includes a chassis having an opening on a liquid crystal panel side surface, numerous light sources (for example, LEDs) housed in the chassis as lamps, and an optical member (diffuser and the like) provided in the opening of the chassis and efficiently discharging light emitted from the light sources to the liquid crystal panel side.

When the light sources emit point-like light in the backlight unit, the point-like light is converted into planar light by the optical member to uniform in-plane brightness of illumination light. However, when the point-like light is not sufficiently converted into the planar light, a point lamp image is generated along arrangement of the light sources, which deteriorates display quality of the liquid crystal display device.

In order to suppress generation of the lamp image in the backlight unit, for example, it is desirable that the number of the light sources to be arranged is increased to reduce a distance between the light sources that are adjacent to each other or a diffusivity of the diffuser is increased. However, when the number of the light sources is increased, cost of the backlight unit is increased, and power consumption is also increased. When the diffusivity of the diffuser is increased, brightness cannot be improved, which disadvantageously requires an increase in the number of the light sources at the same time. Then, a known backlight unit suppressing power consumption and generation of a lamp image is disclosed in the following Patent Document 1.

Patent Document 1 describes that a pitch of LEDs arranged in an outer circumferential area of a diffuser is smaller than that in a center area of the diffuser in the backlight device. Thereby, a color tone of the outer circumferential area equivalent to that of the center area can be obtained, and color unevenness and brightness reduction of the outer circumferential area can be prevented.

Patent Document 1: Japanese Unexamined Patent Publication No. 2006-189665

### Problem to be Solved by the Invention

However, in the device disclosed in Patent Document 1, color unevenness (uneven brightness) may be generated in a portion (the center area in Patent Document 1) having a large pitch.

### DISCLOSURE OF THE PRESENT INVENTION

The present invention was accomplished in view of the above circumstances. It is an object of the present invention to provide a lighting device realizing cost reduction, suppressing of power consumption, and suppressing lamp image generation. It is another object of the present invention to provide a display device including the lighting device. It is still another object of the present invention to provide a television receiver including the display device.

### Means for Solving the Problem

To solve the above problem, a lighting device of the present invention includes a plurality of point light sources, and a chassis housing the point light sources and having an opening through which light from the point light source exits. The point light sources are arranged at relatively small intervals in a light source high-density area and the point light sources are arranged at relatively large intervals in a light source low-density area. The lighting device further includes a diffuser lens configured to diffuse light from the point light sources and the diffuser lens is provided on at least a light exit side of the point light sources arranged at least in the light source low-density area.

Thus, the point light sources are arranged such that the light source high-density area and the light source low-density area are provided. Thereby, the number of the point light sources can be reduced as compared with a case where the light source high-density area is formed over the entire chassis, to realize cost reduction and power saving. Because a distance between the point light sources that are adjacent to each other in the light source low-density area is comparatively larger when the light source low-density area is formed, light from the point light sources is less likely to be mixed with each other. As a result, brightness in a region overlapping with the point light sources is locally increased, which tends to generate a lamp image. In the present invention, the diffuser lens is provided on at least the light exit side of the point light sources arranged in the light source low-density area, to sufficiently diffuse the light emitted from the point light sources. Thereby, after the light emitted from the point light sources is sufficiently mixed with each other also in the light source low-density area, the light is exited as illumination light. Therefore, almost uniform brightness can be obtained over the entire chassis, and the generation of the lamp image can be suppressed.

The diffuser lens may have a circular shape in a plan view.
Because the light from the point light sources is almost uniformly diffused at 360 degrees by the diffuser lens in this case, the generation of the lamp image can further be suppressed.

The diffuser lens may have a light entrance surface facing one of the point light sources and receiving light from the point light source. The light entrance surface may have a light entrance side recess so as to overlap the point light source, and the light entrance side recess is recessed toward the opening. The light entrance side recess may have a side wall inclined so as to face the point light source.
According to such a configuration, the light emitted from the point light sources mostly enters the light entrance side recess of the diffuser lens. In this context, the light entrance side recess has the side wall inclined so as to face the point light source. Therefore, the light entering the light entrance side recess reaches the side wall, and can be refracted into the diffuser lens at a wide angle (that is, toward the outer side from the inner side of the diffuser lens) through the side wall. Thereby, a local increase in brightness in the region overlapping with the point light sources in the diffuser lens can be suppressed, and the generation of the lamp image can further be suppressed.

The diffuser lens may have a light exit surface provided at a side close to the opening. Light emitted from the point light source and entering the diffuser lens exits from the light exit surface. The light exit surface may have a light exit side recess so as to overlap one of the point light source. The light exit side recess may be recessed toward the point light sources.
In this case, an amount of light reaching from the point light sources in the region overlapping with the point light sources in the light exit surface is likely to be increased as compared with that in the other region, which is likely to locally increase brightness. The light exit side recess is formed in the position overlapping with the point light sources in the light exit surface. Therefore, the light from the point light sources can be refracted at a wide angle by the light exit side recess, or the light from the point light sources can be partially reflected. Thereby, the local increase in brightness in the region overlapping with, the point light sources in the light exit surface can be suppressed, and the generation of the lamp image can further be suppressed.

At least the light entrance surface of the diffuser lens may be subjected to surface roughness processing.
Thus, good light can further be diffused by subjecting the diffuser lens to surface roughness processing such as surface etching.

The chassis may have the light source high-density area in a middle area thereof.
According to such a configuration, brightness in a middle area of an irradiation surface of the lighting device can be improved. Therefore, high brightness in a middle area of a display screen is achieved also in the display device including the lighting device. Because human eyes usually pay attention to the center area of the display screen, good visibility can be obtained by achieving high brightness in the center area of the display screen.
The chassis may have the light source low-density area in an outer side area thereof.

The light source high-density area may be smaller than the light source low-density area.
Thus, the light source high-density area has the area smaller than the area of the light source low-density area, and thereby the number of the point light sources can further be reduced, and large effects can be expected in reduction in cost and power saving.

The point light sources may be LEDs.
Thus, longer service life and lower power consumption and the like of the light sources can be achieved.

The lighting device may further include an optical member facing the point light sources and provided to cover the opening of the chassis. The optical member may have a light reflection portion so as to overlap at least the light source low-density area. The light reflecting portion may be configured to reflect light from the point light sources.
In this case, the light emitted from the point light sources in the light source low-density area is mostly reflected to the chassis side by the light reflection portion once. The light is reflected in the chassis while the light is mixed with each other, and can reach the optical member again. Thereby, almost uniform brightness can be obtained over the entire optical member, and the generation of the lamp image can be suppressed. In the present invention, the generation of the lamp image in the light source low-density area can further be suppressed by the effect of the diffuser lens formed in the point light source of the light source low-density area as well.

The light reflection portion may be formed on the optical member so as to overlap the point light source in a plan view.
Because the light emitted from the point light sources certainly reaches the light reflection portion according to such a configuration, and can be reflected to the chassis side by the light reflection portion while the light is mixed with each other, the generation of the lamp image can further be suppressed.

The light reflection portion may have a planar area greater than each point light source.
Because the light emitted from the point light sources can be certainly reflected by the light reflection portion according to such a configuration, the generation of the lamp image can further be suppressed.

The light reflection portion may be formed such that a light reflectance of a portion of the optical member overlapping the light source low-density area is highest in the optical member.
The light from the point light sources can be most reflected in the region overlapping with the light source low-density area in the optical member to the light source low-density area where the lamp image tends to be most generated according to such a configuration. Thereby, the light from the point light sources can be likely to be mixed with each other, and the generation of the lamp image can be suitably suppressed.

The optical member may have the light reflection portion on a surface facing each point light source.
Because the light reaching the optical member from the point light sources can be certainly reflected according to such a configuration, the generation of the lamp image can be suppressed.

The light reflection portion may be formed by subjecting the optical member to print processing.
Thus, a form of a pattern of the light reflection portion can be suitably designed by forming the light reflection portion by the print processing, and the pattern of the light reflection portion can easily be formed as designed.

The optical member may be a light diffusion member diffusing light from the point light sources.
In this case, light transmission can be controlled in every region of the optical member by a light reflectance distribution of the optical member. In addition, light can be diffused by the light diffusion member. Thereby, the generation of the lamp image can further be suppressed in the lighting device.

Next, to solve the above problem, a display device of the present invention includes the lighting device and a display panel configured to provide display using light from the lighting device.
Because the lighting device can reduce cost and suppress generation of a lamp image, such a display device can reduce the cost and realize good display suppressing the generation of the lamp image.

Examples of the display panel include a liquid crystal panel. Such a display device can be applied to various applications as a liquid crystal display device, for example, a television set and a display for a personal computer. The display device is particularly suitable for a large-sized screen.

A television receiver of the present invention includes the display device.
Such a television receiver can provide a device having excellent visibility.

### Advantageous Effect of the Invention

The lighting device of the present invention can realize reduction in cost and suppression of power consumption and obtain almost uniform illumination light generating no lamp image. Since the display device of the present invention includes such a lighting device, the display device can reduce cost and realize good display. In addition, because the television receiver of the present invention includes such a display device, the television receiver can provide a device having excellent visibility.

### BRIEF DESCRIPTION OF THE DRAWINGS

FIG. 1 is an exploded perspective view illustrating a schematic configuration of a television receiver according to a first embodiment of the present invention;
FIG. 2 is an exploded perspective view illustrating a schematic configuration of a liquid crystal display device included in the television receiver;
FIG. 3 is a cross-sectional view illustrating a cross-sectional configuration along a short-side direction of the liquid crystal display device;
FIG. 4 is a plan view illustrating a schematic configuration of an LED board included in the liquid crystal display device;
FIG. 5 is a schematic view illustrating an arranging mode of light reflection portions formed on a surface facing the LED board in a diffuser included in a backlight unit;
FIG. 6 is a cross-sectional view illustrating a schematic configuration of an LED light source provided on the LED board;
FIG. 7 is a cross-sectional view illustrating a modification of the arranging mode of the light reflection portions;
FIG. 8 is a graph showing a change in light reflectance in a Y-axis direction of a diffuser of FIG. 7;
FIG. 9 is a cross-sectional view illustrating a cross-sectional configuration along a short-side direction of the liquid crystal display device included in the television receiver according to the second embodiment.

### BEST MODE FOR CARRYING OUT THE INVENTION

### <First embodiment>

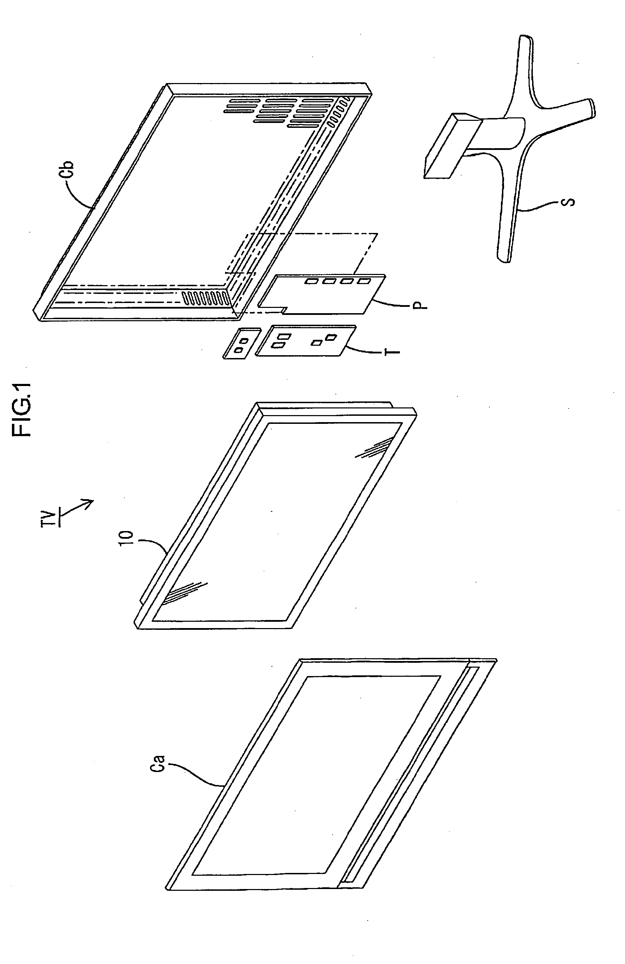

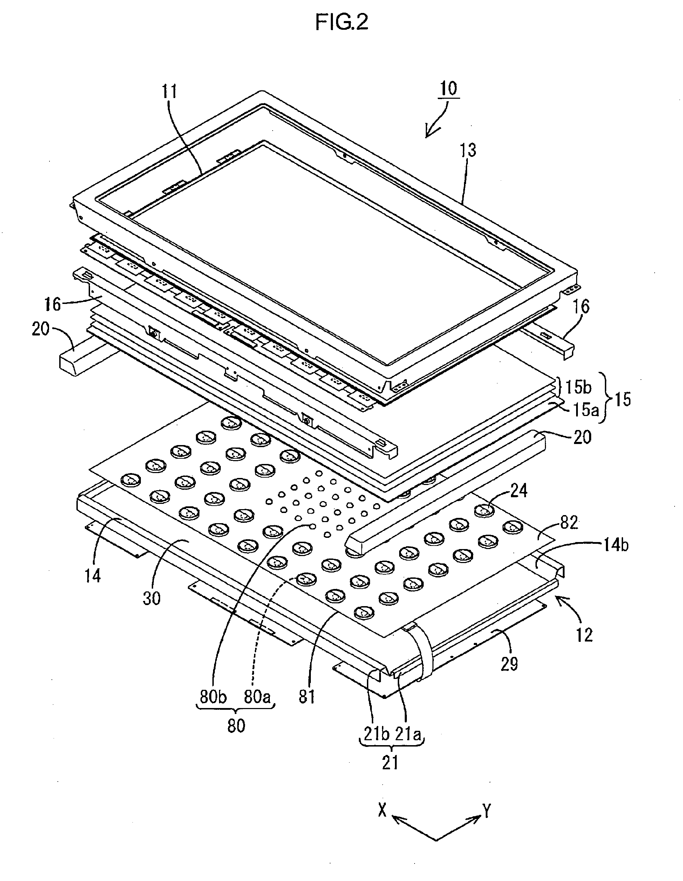

A first embodiment of the present invention will be described with reference to FIGS. 1 to 6.
First, a configuration of a television receiver TV including a liquid crystal display device 10 will be described.
As illustrated in FIG. 1, the television receiver TV of the present embodiment includes the liquid crystal display device 10, front and rear cabinets Ca, Cb which house the liquid crystal display device 10 therebetween, a power source P, a tuner T and a stand S. An entire shape of the liquid crystal display device (display device) 10 is a landscape rectangular. The liquid crystal display device 10 is housed in a vertical position. As illustrated in FIG. 2, the liquid crystal display device 10 includes a liquid crystal panel 11 as a display panel, and a backlight unit (lighting device) 12 as an external light source. The liquid crystal panel 11 and the backlight unit 12 are integrally held by a frame shaped bezel 13 and the like.

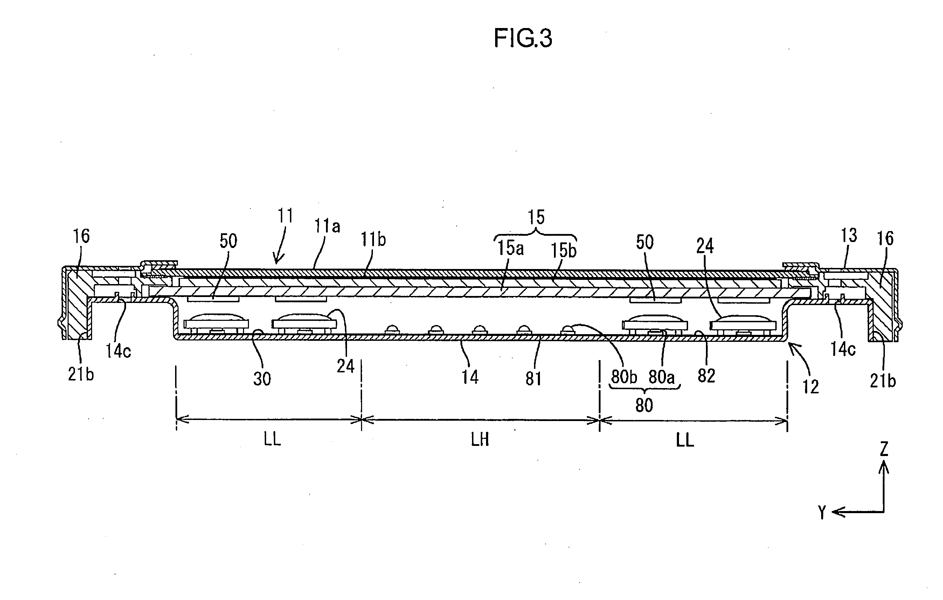

Next, the liquid crystal panel 11 and the backlight unit 12 included in the liquid crystal display device 10 will be described (see FIGS. 2 and 3).
The liquid crystal panel (display panel) 11 is configured such that a pair of glass substrates is bonded together with a predetermined gap therebetween and liquid crystal is sealed between the glass substrates. On one of the glass substrates, switching components (for example, TFTs) connected to source lines and gate lines which are perpendicular to each other, pixel electrodes connected to the switching components, and an alignment film and the like are provided. On the other substrate, color filters having color sections such as R (red), G (green) and B (blue) color sections arranged in a predetermined pattern, counter electrodes, and an alignment film and the like are provided. Polarizing plates 11a, 11b are attached to outer surfaces of the substrates (see FIG. 3).

As illustrated in FIG. 2, the backlight unit 12 includes a chassis 14, an optical sheet set 15 (a diffuser (optical member, optical diffusing member) 15a, and a plurality of optical sheets 15b which is provided between the diffuser 15a and the liquid crystal panel 11), and a frame 16. The chassis 14 has a substantially box-shape, and has an opening 14b on the light exit surface side (on the liquid crystal panel 11 side). The optical sheet set 15 is provided so as to cover the opening 14b of the chassis 14. The frame 16 provided along a long side of the chassis 14 holds a long-side edge part of the diffuser 15a in a state where the long-side edge part is sandwiched between the frame 16 and the chassis 14. The backlight unit 12 further includes an LED board 81 including point LED light sources (point light sources) 80, and outer edge members 20 formed in a short-side edge portion and directing light from the LED light sources 80 to the inside in the chassis 14. In the backlight unit 12, a light exit side of the backlight unit 12 is a side closer to the diffuser 15a than the LED boards 81.

The chassis 14 is made of metal. The chassis 14 is formed in a substantially shallow box shape through sheet metal forming. As illustrated in FIG. 3, the chassis 14 includes a rectangular bottom plate 30 and folded outer edge portions 21 (folded outer edge portions 21a in a short-side direction and folded outer edge portions 21b in a long-side direction), each of which extends upright from the corresponding peripheral edge of the bottom plate 30 and has a substantially U shape. Furthermore, as illustrated in, FIG. 3, the chassis 14 includes fixing holes 14c formed in an upper surface of the folded outer edge portion 21b thereof to bind the bezel 13, the frames 16 and the chassis 14 and the like together with screws and the like.

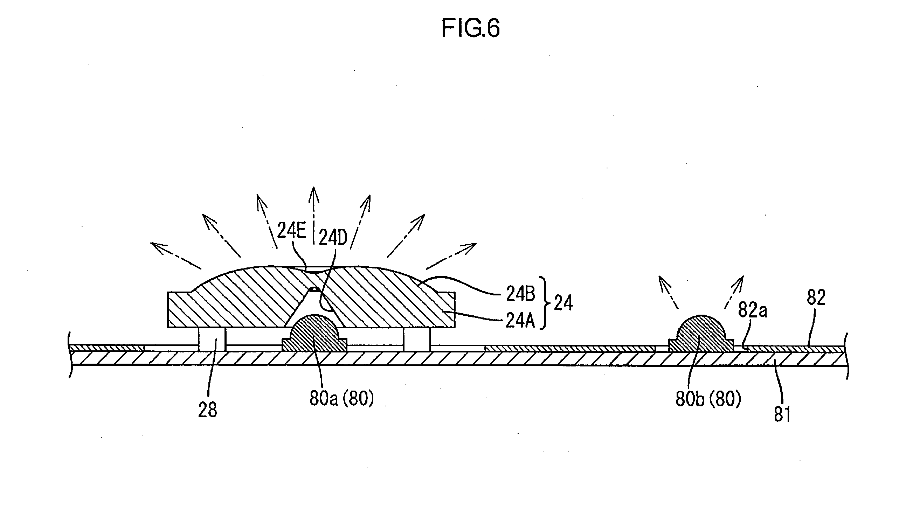

The LED board 81 is laid on an inner surface of the bottom plate 30 of the chassis 14. The LED board 81 has a reflection sheet 82 laid on a light exit side surface, that is, a surface facing the diffuser 15a, and a plurality of LED light sources 80 surrounded by the reflection sheet 82, that is, provided so as to exposed from openings 82a (see FIG. 6) formed in the reflection sheet 82. Although one LED board 81 is used for the liquid crystal panel 11 in the present embodiment, for example, the LED board 81 may be divided into multiple, to properly arrange the plurality of LED boards 81 in a plane.

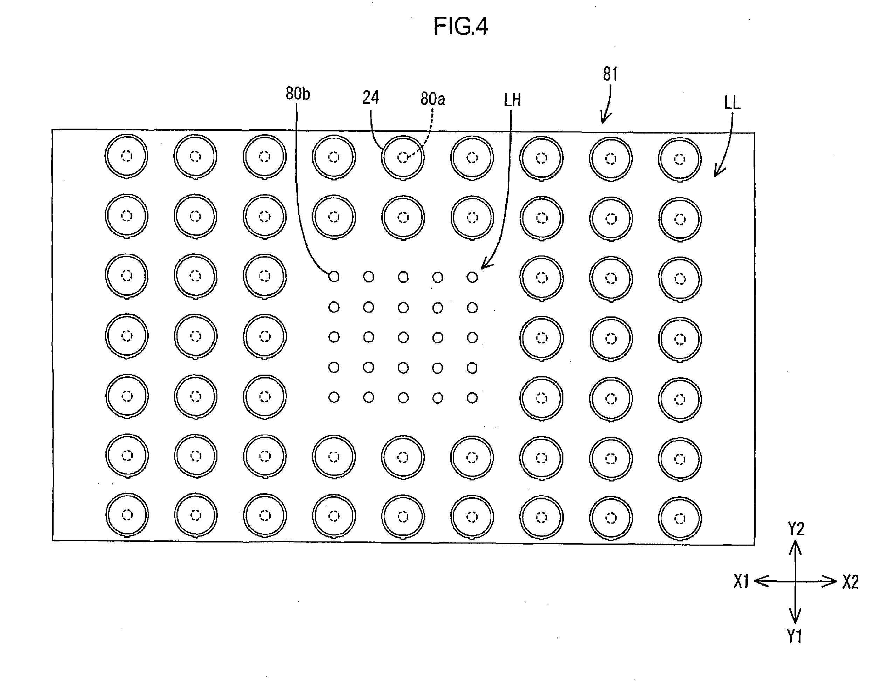

The LED light sources 80 emit white color light. For example, three kinds of red, green, and blue LED chips (not shown) may be face-mounted. Alternatively, the LED light sources 80 may be obtained by combining a blue LED chip with a yellow fluorescent material. As illustrated in FIGS. 3 and 4, the LED light sources 80 are arranged on the LED board 81 such that a light source high-density area LH where an arrangement interval thereof is relatively small is formed in a center area (that is, a center area of the chassis 14) of the LED board 81 and a light source low-density area LL where an arrangement interval thereof is relatively large is formed in an outer edge portion (that is, an outer edge portion of the chassis 14) of the LED board 81. The light source high-density area LH located in the center area of the LED board 81 has an area smaller than an area of the light source low-density area LL located in the outer edge portion (outer side) of the LED board 81. In the present embodiment, the LED light sources provided in the light source high-density area LH are illustrated as high density side LED light sources 80b, and the LED light sources provided in the light source low-density area LL are illustrated as low density side LED light sources 80a.

The low density side LED light sources 80a of the LED light sources 80 are covered with diffuser lenses 24 for diffusing lights emitted from the low density side LED light sources 80a. The high density side LED light sources 80b are not covered with the diffuser lenses 24. The diffuser lens 24 is formed of a transparent member (for example, acrylic and polycarbonate) having a refractive index higher than that of air. The diffuser lens 24 functions to refract light emitted from each LED light source 80a to diffuse the light. The diffuser lens 24 has a circular shape in a plan view, and the LED light source 80a is provided at a center thereof. As illustrated in FIG, 6, the diffuser lens 24 is provided so as to cover the front side of the LED light source 80a. The diffuser lens 24 includes a base portion 24A having a circular plate shape in a plan view and a flat spherical portion 24B having a flat semi-spherical shape. Three leg parts 28 are provided so as to protrude from a peripheral part of the diffuser lens 24. The three leg parts 28 are arranged at approximately equal intervals (intervals of about 120 degrees) from a center part of the diffuser lens 24 in a plan view. For example, the leg parts 28 are fixed to the LED board 81 by an adhesive or a thermosetting resin.

The diffuser lens 24 has a recess (light entrance side recess) 24D having a substantially conical shape formed in a lower surface (LED light source 80a side) thereof by denting a place located immediately above the LED light source 80a to the front side (upper side of FIG. 6, that is, the diffuser 15a side). The recess 24D has a side wall inclined so as to face the LED light source 80a. The lower surface (LED light source 80a side) of the diffuser lens 24 is subjected to surface roughness processing, to further improve diffusivity. The diffuser lens 24 also has a recess (light exit side recess) 24E having a substantially mortar shape formed in a top portion (a top portion located on a side (that is, light exit side) facing the diffuser 15a) thereof. The recess 24E includes an inner peripheral surface having a circular arc shape in a section view. As illustrated in FIG. 6, the light from the LED light source 80a is refracted over a wide angle on a boundary between the diffuser lens 24 and air by such a configuration, and is diffused to circumference of the LED light source 80a.

The reflection sheet 82 formed on the LED board 81 is made of a synthetic resin, and has a surface having white color that provides excellent light reflectivity. The reflection sheet 82 is provided along an inner surface of the bottom plate 30 of the chassis 14 to cover the almost entire chassis 14. The light emitted from the LEDs 80 can be reflected to the diffuser 15a side by the reflection sheet 82.

As illustrated in FIG. 3, the chassis 14 includes a light source driving board 29 attached to an outer surface (a surface opposite to a surface on which the LED light sources 80 are provided) of the bottom plate 30 thereof to supply driving power to the LED light sources 80.

The optical sheet set 15 including the diffuser (optical member, optical diffusing member) 15a and the optical sheets 15b is provided on the opening side 14b of the chassis 14. The diffuser 15a includes a plate-like member made of a synthetic resin and light scattering particles dispersed in the plate-like member. The diffuser 15a has a function for diffusing point light emitted from the LED light sources 80 as the point light sources and also has a function for reflecting the light emitted from the LED light sources 80.

The diffuser 15a has an optical sheet 15b thereon. The optical sheet 15b is obtained by laminating a diffusion sheet, a lens sheet, and a reflection type polarizing plate in this order from the diffuser 15a side. The optical sheet 15b has a function for converting light emitted from the LED light source 80 and passed through the diffuser 15a into planar light. The optical sheet 15b has the liquid crystal panel 11 placed on the upper surface side thereof. The optical sheet 15b is sandwiched between the diffuser 15a and the liquid crystal panel 11.

The light reflection function of the diffuser 15a and a forming aspect of the light reflection portion will be described with reference to FIGS. 3 to 5. In FIGS. 3 to 5, a long-side direction of the diffuser is defined as an X-axis direction; a short-side direction thereof is defined as a Y-axis direction; and a thickness direction thereof is defined as a Z-axis direction.

The diffuser 15a has light reflection portions 50 forming a white dot pattern provided on a surface facing the LED light sources 80. In the present embodiment, each dot of the light reflection portions 50 has a round shape. The dot pattern of the light reflection portions 50 is formed by printing paste containing metal oxide (titanium oxide and the like), for example, on the surface of the diffuser 15a. Preferable printing means are screen printing and inkjet printing and the like.

The light reflection portion 50 has a light reflectance of 80% in a surface facing the LED light source 80. The light reflection portion 50 has a light reflectance relatively greater than a light reflectance of 30% in a surface of the diffuser 15a itself. In this context, in the present embodiment, the light reflectance of each material is represented by an average light reflectance inside the measurement diameter measured with an LAV of CM-3700d (measurement diameter φ of 25.4 mm) manufactured by Konica Minolta. The light reflectance of the light reflection portion 50 is a value obtained by forming the light reflection portion 50 over an entire surface of a glass substrate and measuring the surface based on the above measuring means. The light reflectance of the light reflection portion 50 is preferably 80% or greater, and more preferably 90% or greater. Thus, as the light reflectance of the light reflection portion 50 is higher, the reflection degree can be controlled precisely and accurately according to an aspect of the dot pattern (the number of dots and the area of each dot and the like).

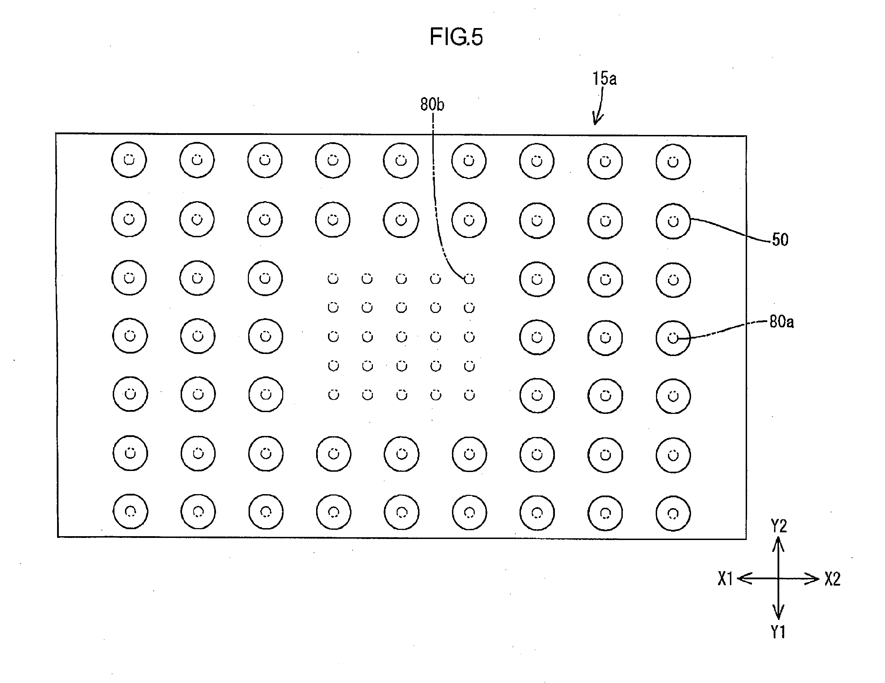

In the present embodiment, the light reflection portion 50 is provided in at least a region overlapping with the light source low-density area LL in the diffuser 15a. Particularly, the light reflection portion 50 is formed in a position overlapping with the low density side LED light source 80a in a plan view. As illustrated in FIG. 5, the light reflection portion 50 has a planarly viewed area greater than a planarly viewed area of the LED light source 80 (low density side LED light source 80a). According to the arranging mode of the light reflection portions 50, the light reflectance of the diffuser 15a is the greatest in a region overlapping with the light source low-density area LL in a surface facing the LED light source 80 in the diffuser 15a.

The configuration of the liquid crystal display device 10 included in the television receiver TV of the first embodiment has been described above. Operations and effects exhibited by the configuration will then be described.
First, in the present embodiment, the backlight unit 12 has the plurality of point LED light sources 80 (80a, 80b). The LED light sources 80 (80a, 80b) are arranged such that the light source high-density area LH where the arrangement interval thereof is relatively small and the light source low-density area LL where the arrangement interval is relatively large are provided. Thus, the LED light sources 80 are arranged in the light source high-density area LH and the light source low-density area LL. Thereby, the number of the LED light sources 80 can be reduced as compared with a case where the light source high-density area LH is formed over the entire chassis 14, to enable realization of cost reduction and power saving.

Because the distance between the LED light sources 80, 80 (80a, 80a) that are adjacent to each other in the light source low-density area LL is comparatively large when the light source low-density area LL is formed, light emitted from the LED light sources 80 (80a) is likely to reach the diffuser 15a without mixing the light with each other. As a result, brightness in the region overlapping with the LED light sources 80 (80a) in the diffuser 15a is locally increased, which tends to generate a lamp image. In the present embodiment, the diffuser lenses 24 are provided on at least the light exit side of the LED light sources 80a belonging to the light source low-density area LL in the LED light sources 80, to sufficiently diffuse the light emitted from the LED light sources 80a. Thereby, after the light emitted from the LED light sources 80a is sufficiently mixed with each other also in the light source low-density area LL, the light reaches the diffuser 15a. Therefore, almost uniform brightness can be obtained over the entire chassis 14, and the generation of the lamp image is suppressed.

The diffuser lens 24 has a circular shape in a plan view. Thereby, because the light from the LED light sources 80 (80a) is almost uniformly diffused at 360 degrees by the diffuser lenses 24, the generation of the lamp image can further be suppressed.

The diffuser lens 24 includes the light entrance surface facing each LED light source 80 (80a) and receiving light from each LED light source 80 (80a). The light entrance surface includes the recess 24D formed in the position overlapping with each LED light source 80 (80a). The recess 24D has the side wall inclined so as to face each LED light source 80 (80a). According to such a configuration, the light emitted from the LED light sources 80 (80a) mostly enters the recess 24D of each diffuser lens 24. In this context, the recess 24D has the side wall inclined so as to face each LED light source 80 (80a). Therefore, the light entering the recess 24D reaches the side wall, and can be refracted into the diffuser lens 24 at a wide angle (that is, toward the outer side from the inner side of the diffuser lenses 24) through the side wall. Thereby, the local increase in brightness in the region overlapping with the LED light sources 80 (80a) in the diffuser lens 24 can be suppressed, and the generation of the lamp image can further be suppressed.

The diffuser lens 24 has the light exit surface from which light entering from each LED light source 80 (80a) exits. The light exit surface includes the light exit side recess 24E recessed to the LED light source 80 (80a) side formed in the position overlapping with each LED light source 80 (80a). The amount of light reaching from the LED light sources 80 (80a) in the region overlapping with the LED light sources 80 (80a) in the light exit surface is likely to be increased as compared with that in the other region, which is likely to locally increase brightness. Then, the light exit side recess 24E is formed in the position overlapping with the LED light sources 80 (80a) in the light exit surface. Therefore, the light from the LED light sources 80 (80a) can be refracted at a wide angle by the light exit side recess 34E, or the light from the LED light sources 80 (80a) can be partially reflected. Thereby, the local increase in brightness in the region overlapping with the LED light sources 80 (80a) in the light exit surface can be suppressed, and the generation of the lamp image can further be suppressed.

In the present embodiment, the diffuser 15a includes the light reflection portion 50 formed in the position overlapping with each LED light source 80 (80a) in a plan view. Therefore, because the light emitted from the LED light sources 80 (80a) certainly reaches the light reflection portions 50, and can be reflected to the chassis 14 side by the light reflection portion 50 while the light is mixed with each other, the generation of the lamp image can further be suppressed.

The light reflection portion 50 has a planarly viewed area greater than a planarly viewed area of each LED light source 80 (80a). Therefore, because the light emitted from the LED light sources 80 (80a) can be certainly reflected by the light reflection portion 50, the generation of the lamp image can further be suppressed.

The light reflection portion 50 is formed such that the light reflectance of the diffuser 15a is the greatest in the region overlapping with the light source low-density area LL in the diffuser 15a. Because the light from the LED light sources 80 (80a) can be most reflected in the region overlapping with the light source low-density area LL where the lamp image tends to be generated in the diffuser 15a in this case, the light from the LED light sources 80 (80a) can be likely to be mixed with each other, and the generation of the lamp image can be suitably suppressed.

The diffuser 15a includes the light reflection portion 50 is formed on the surface facing each LED light source 80 (80a). Therefore, because the light reaching the diffuser 15a from the LED light sources 80 (80a) can be certainly reflected, the generation of the lamp image can be suppressed.

The light reflection portion 50 is formed by subjecting the diffuser 15a to print processing. Therefore, the form of the pattern of the light reflection portion 50 can be suitably designed, and the pattern of the light reflection portion 50 can be easily formed as designed.

The chassis 14 includes the light source high-density area LH formed in the center area thereof. Thereby, brightness in the center area of the irradiation surface of the backlight unit 12 is improved. As a result, high brightness in the center area of the display screen is achieved also in the liquid crystal display device 10. Because human eyes usually pay attention to the center area of the display screen, good visibility can be obtained by achieving the high brightness in the center area of the display screen.

The light source high-density area LH has an area smaller than an area of the light source low-density area LL. The light source high-density area LH has the area smaller than the area of the light source low-density area LL , and thereby the number of the LED light sources 80 can further be reduced.

### <Modification of first embodiment>

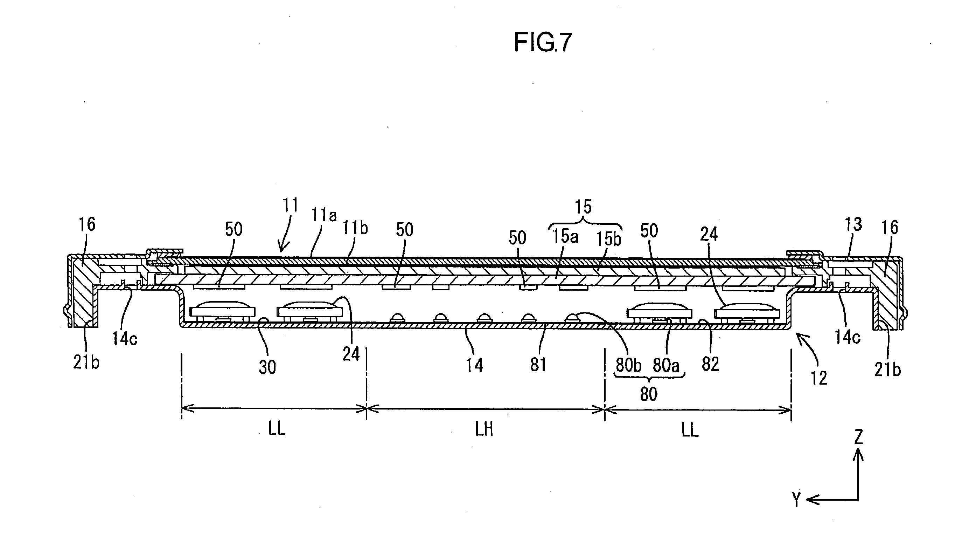

As described above, the first embodiment of the present invention has been illustrated. However, the present invention is not limited to the above embodiment. A modification of a distribution mode of the light reflection portions 50 illustrated in FIG. 7 may be employed, for example. In this modification, the same constituent parts and constituent elements as those of the first embodiment are indicated by the same symbols, and will not be described.

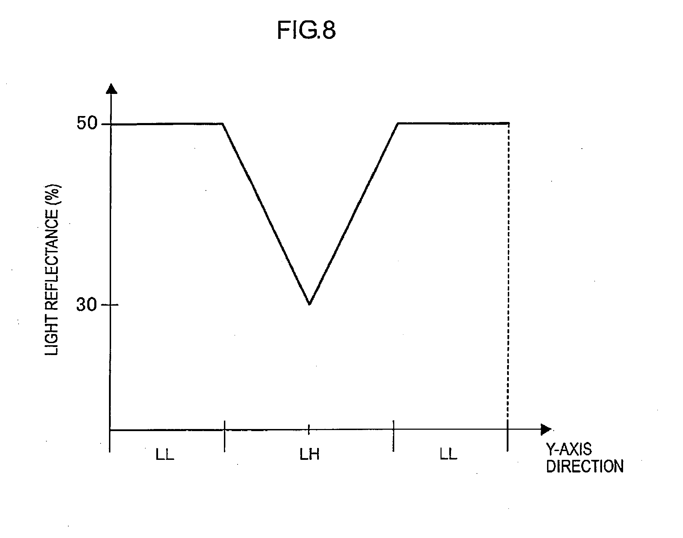

The diffuser 15a in the present modification includes the light reflection portions 50 provided in at least positions facing the LED light sources 80 in not only the position overlapping with the light source low-density area LL but also the position overlapping with the light source high-density area LH as illustrated in FIG. 7. In this case, in the light reflection portions 50, the area of the dot in the position overlapping with the light source high-density area LH is smaller than the area in the light source low-density area LL side, and/or the density of the dot is smaller than the density in the light source low-density area LL side. Thereby, the light reflectance of the diffuser 15a in the light source high-density area LH side is smaller than that in the light source low-density area LL side as illustrated in FIG. 8.

Such a modification can reduce the number of the LED light sources 80 while securing brightness in the center area of the backlight unit 12, and realizes cost reduction. Particularly because the light reflection portions 50 are formed in the outer edge portion in which the number of the LED light sources 80 is reduced, generation of uneven brightness is suppressed. The generation of the uneven brightness in the center area is also suppressed by partially forming the light reflection portions 50 also in the center area.

### <Second embodiment>

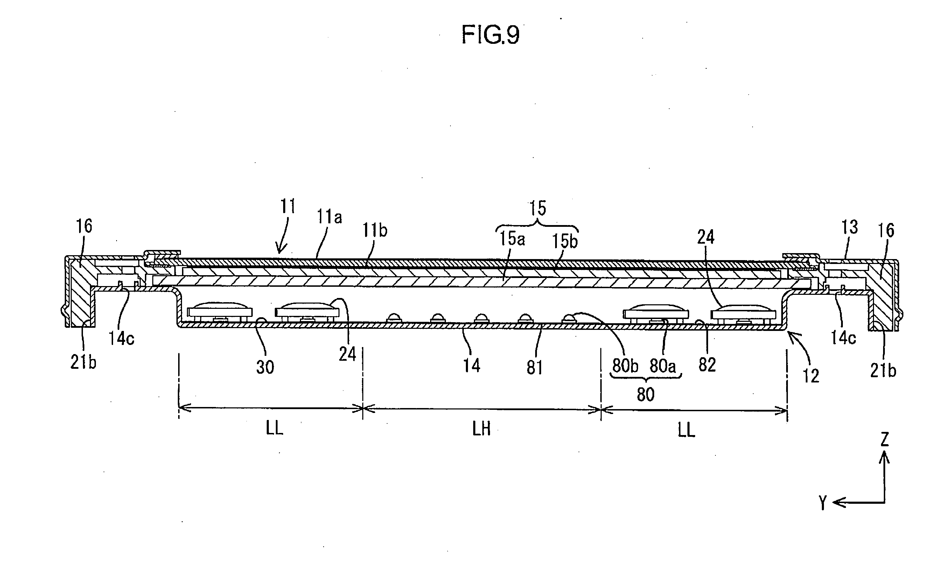

Next, a second embodiment of the present invention will be described with reference to FIG 9.
In a liquid crystal display device 10 included in a television receiver TV of the second embodiment, the light reflection portions 50 are omitted from the backlight unit 12 of the first embodiment, and the others are the same as those of the first embodiment. The same constituent parts as those of the above first embodiment are indicated by the same symbols without repeating overlapping descriptions.

The backlight unit 12 employed for the second embodiment has the LED light sources 80 provided on the LED board 81. The LED light sources 80 are arranged on the LED board 81 such that the light source high-density area LH where the arrangement interval of the LED light sources 80 is relatively small is formed in the center area (that is, the center area of the chassis 14) of the LED board 81, and the light source low-density area LL where the arrangement interval of the LED light sources 80 is relatively large is formed on the outer edge portion (that is, the outer edge portion of the chassis 14) of the LED board 81. The area of the light source high-density area LH located in the center area of the LED board 81 is smaller than the area of the light source low-density area LL located in the outer edge portion of the LED board 81. The LED light sources provided in the light source high-density area LH are illustrated as high density side LED light sources 80b. The LED light sources provided in the light source low-density area LL are illustrated as low density side LED light sources 80a.

Similarly to the first embodiment, the low density side LED light sources 80a of the LED light sources 80 are covered with diffuser lenses 24 diffusing light emitted from the low density side LED light sources 80a. The high density side LED light sources 80b are not covered with the diffuser lenses 24. The diffuser lens 24 is formed of a transparent member (for example, acrylic and polycarbonate) having a refractive index higher than that of air. The diffuser lens 24 functions to refract light emitted from each LED light source 80a to diffuse the light. The diffuser lens 24 has a circular shape in a plan view, and the LED light source 80a is provided at a center thereof. The diffuser lens 24 is provided so as to cover the front side of the LED light source 80a. The diffuser lens 24 includes a base portion 24A having a circular plate shape in a plan view and a flat spherical portion 24B having a flat semi-spherical shape. Three leg parts 28 are provided so as to protrude from a peripheral part of the diffuser lens 24. The three leg parts 28 are arranged at approximately equal intervals (intervals of about 120 degrees) from a center part of the diffuser lens 24 in a plan view. For example, the leg parts 28 are fixed to the LED board 81 by an adhesive or a thermosetting resin.

In the present embodiment, the light reflection portion 50 is not formed on the diffuser 15a unlike the first embodiment. That is, the diffuser lenses 24 cover the LED light sources 80a, as means for suppressing uneven brightness of the LED light sources 80a configured to have a low density such that the arrangement interval of the light sources is large. However, the light reflection portion 50 as means for suppressing uneven brightness is not formed on the diffuser 15a. In this case, uneven brightness caused by the LED light sources 80a of the light source low-density area LL can be suppressed by the diffuser lenses 24 depending on the arrangement interval of the light sources.

### <Other embodiment>

As describe above, the embodiments of the present invention have been described. However, the present invention is not limited to the above embodiments described in the above description and the drawings. The following embodiments are also included in the technical scope of the present invention, for example.

(1) The above embodiments using the LED which is a kind of point light source as the light source have been illustrated. However, other kind of point light source such as a glow lamp is also used in the present invention.

(2) Each dot of the dot pattern constituting the light reflection portion has been formed into a round shape in the above embodiments. However, the shape of each dot is not limited thereto. Optional shapes such as a polygonal shape, for example, a rectangular shape can be selected.

(3) In the above embodiment, the optical sheet set obtained by combining the diffuser with the diffuser sheet, the lens sheet, and the reflecting type polarizing plate is exemplified. However, for example, an optical sheet obtained by laminating two diffusers can also be employed.

(4) The light reflection portions are formed on the surface of the diffuser facing the light source in the above embodiments. However, the light reflection portions may be formed on the surface of the diffuser opposite to the light source.

(5) The configuration in which the light source high-density area is formed in the center area of the bottom plate of the chassis has been illustrated in the above embodiments. However, the configuration can be suitably changed according to the amount of light of the light source and the operating condition of the backlight unit and the like. For example, the light source high-density area is formed in a part of the end area in addition to the center area of the bottom plate.

### EXPLANATION OF SYMBOLS

10: liquid crystal display device (display device)
11: liquid crystal panel (display panel)
12: backlight unit (lighting device)
14: chassis
14b: opening of chassis
15a: diffuser (optical member, light diffuser member)
24: diffuser lens
24D: recess (light entrance side recess)
24E: recess (light exit side recess)
50: light reflection portion
80: LED light source (point light source)
80a: low density side LED light source (point light source)
80b: high density side LED light source (LED light source)
LL: light source low-density area
LH: light source high-density area
TV: television receiver

## Claims

1. A lighting device comprising:
a plurality of point light sources; and
a chassis housing the point light sources and having an opening through which light from the point light sources exits, wherein:
the point light sources are arranged at relatively small intervals in a light source high-density area and the point light sources are arranged at relatively large intervals in a light source low-density area, and
the lighting device further comprising a diffuser lens configured to diffuse light from each of the point light sources and provided on a light exit side of the point light sources arranged at least in the light source low-density area.

2. The lighting device according to claim 1, wherein the diffuser lens has a circular shape in a plan view.

3. The lighting device according to one of claims 1 and 2, wherein:
the diffuser lens has a light entrance surface facing one of the point light sources and receiving light from the point light source;
the light entrance surface has a light entrance side recess so as to overlap the point light source, the light entrance side recess is recessed toward the opening; and
the light entrance side recess has a side wall inclined so as to face the point light source.

4. The lighting device according to any one of claims 1 to 3, wherein:
the diffuser lens has a light exit surface provided at a side close to the opening and light emitted from the point light source and entering the diffuser lens exits from the light exit surface; and
the light exit surface has a light exit side recess so as to overlap one of the point light sources and the light exit side recess is recessed toward the point light sources.

5. The lighting device according to any one of claims 1 to 4, wherein at least the light entrance surface of the diffuser lens is subjected to surface roughness processing.

6. The lighting device according to any one of claims 1 to 5, wherein the chassis includes the light source high-density area in a middle area thereof.

7. The lighting device according to any one of claims 1 to 6, wherein the chassis includes the light source low-density area in an outer side area thereof.

8. The lighting device according to any one of claims 1 to 7, wherein the light source high-density area is smaller than the light source low-density area.

9. The lighting device according to any one of claims 1 to 8, wherein the point light sources are LEDs.

10. The lighting device according to any one of claims 1 to 9, further comprising an optical member facing the point light sources and provided to cover the opening of the chassis, wherein the optical member has a light reflection portion so as to overlap at least the light source low-density area, the light reflecting portion is configured to reflect light from the point light sources.

11. The lighting device according to claim 10, wherein the optical member includes the light reflection portion so as to overlap one of the point light sources in a plan view.

12. The lighting device according to claim 11, wherein the light reflection portion has a planar area greater than each of the point light sources.

13. The lighting device according to any one of claims 10 to 12, wherein the light reflection portion is formed such that a light reflectance of a portion of the optical member overlapping the light source low-density area is highest.

14. The lighting device according to any one of claims 10 to 13, wherein the optical member includes the light reflection portion on a surface thereof facing one of the point light sources.

15. The lighting device according to any one of claims 10 to 14, wherein the light reflection portion is formed by subjecting the optical member to print processing.

16. The lighting device according to any one of claims 10 to 15, wherein the optical member is a light diffusion member configured to diffuse light from the point light sources.

17. The display device comprising:
the lighting device according to any one of claims 1 to 16; and
a display panel configured to provide display using light from the lighting device.

18. The display device according to claim 17, wherein the display panel is a liquid crystal panel using liquid crystals.

19. A television receiver comprising the display device according to claim 17 or 18.
